**Europäisches Patentamt**

(19) **European Patent Office**

**Office européen des brevets**

(11) Publication number : **0 390 834 B1**

(12) # EUROPEAN PATENT SPECIFICATION

(45) Date of publication of patent specification :
17.06.92 Bulletin 92/25

(51) Int. Cl.⁵ : **F16G 11/10, F21V 21/02**

(21) Application number : **89900298.4**

(22) Date of filing : **06.12.88**

(86) International application number :
**PCT/IT88/00086**

(87) International publication number :
**WO 89/05413 15.06.89 Gazette 89/13**

(54) **QUICK-ACTING CLAMP, WHOSE CLAMPING FORCE IS A DIRECT FUNCTION OF THE LOAD, FOR WIRES SUSPENDING WEIGHTS, ESPECIALLYCHANDELIERS.**

(30) Priority : **10.12.87 IT 2285587 U**

(43) Date of publication of application :
**10.10.90 Bulletin 90/41**

(45) Publication of the grant of the patent :
**17.06.92 Bulletin 92/25**

(84) Designated Contracting States :
**DE FR GB NL**

(56) References cited :
**CH-A- 171 451**
**DE-C- 320 151**
**GB-A- 1 082 769**
**US-A- 1 434 802**
**US-A- 1 485 045**
**US-A- 1 726 306**
**US-A- 2 460 640**

(73) Proprietor : **GRASSI, Enrico**
**Via Vittorio Emanuele 54**
**I-20020 Lazzate (IT)**
Proprietor : **RONCHI, Daniela**
**Via Vittorio Emanuele 54**
**I-20020 Lazzate (IT)**

(72) Inventor : **GRASSI, Enrico**
**Via Vittorio Emanuele 54**
**I-20020 Lazzate (IT)**
Inventor : **RONCHI, Daniela**
**Via Vittorio Emanuele 54**
**I-20020 Lazzate (IT)**

(74) Representative : **Filippi, Remo**
**Via Aldrovandi, 5**
**I-20129 Milano (IT)**

## Description

The invention concerns a clamp for fixing wires or cables from which weights, especially lamps, chandeliers and the like are suspended from ceilings.

Clamps, connecting parts, the many kinds of hooks used for fixing wires carrying weights, especially lamps, chandeliers and the like, are usually either complicated or insecure. If fixing is done by locking screws, or similar means, it is clearly difficult to adjust pressure so that the cable is not damaged in an effort to ensure complete safety.

The need to suit the length of wire to the various types of chandelier, to ceiling height and user preferences, often only achieved after repeated attempts, aggravates the situation and makes complications more probable.

Over a period of time the wire may even break loose for reasons such as materials losing their shape, dimensional variations caused by changes in environmental temperatures, or. an accident.

The document US-A-2 460 640 discloses a clamp for cables or wires comprising a body containing a channel inside which a clamping pawl is mounted, by means of a pin, for the cable that can lodge between said pawl and the bottom of the channel.

Said pawl is eccentric so that its rotation, caused by a pull on the cable, automatically increases the tightening force on said cable in accordance with the load. A serious drawback to this device is that the pawl's tightening force is assured only if tension on the cable is maintained constant or increases. But if the suspended load, especially a chandelier, is raised for any reason, the effect of this upward movement, or even merely an absence of traction, is that the cable may easily free itself from the pawl and may even cause said pawl to rotate in the direction opposite to that which ensures its grip on the cable.

Fixing devices that offer reasonable guarantees of safety are costly, difficult to mount and probably cumbersome.

The device as claimed in claim 1 avoids these drawbacks as well as offering considerable advantages as the following description shows.

The clamp to fix wires or cables carrying weights, especially lamps and chandeliers, subject of the invention, comprises a slot for the upper extremity of the wire at the free end of a clamping pawl articulated, in relation to the pull exerted on the wire, downstream of the area of contact between pawl and wire.

The length of the pawl plus wire thickness is greater than the distance between articulation of the pawl and the base of the slot opposite to it. Therefore, due to pull exerted by the load, the pawl will tend to move from an inclined position in relation to the wire, in the direction away from its pull, and to assume an orthogonal position so that the clamping force between the pawl and the base opposite forming the slot for the wire, namely the gripping force which the clamp as a whole provides, will automatically tend to increase as the load increases.

A hole through the base of the above slot allows the wire to be pushed into the slot, in a direction opposite to that of pull, and to rest on said base after making a 90° bend which increases the clamping force.

Said slot preferably consists of a U-shaped fork whose squared central section forms the base of the slot.

Holes made through the sides of the U-fork and aligned at an angle of 90° to the hole in the base, carry the pin on which the pawl articulates.

The width of space for the wire in the fork is about the same as that of the pawl though sufficient tolerance is allowed for said pawl to rotate freely.

The sides of the fork are parallel to each other and to those of the pawl.

A projecting part of the pawl, furthest away from the direction of pull, contains one or more holes through it, parallel to the pawl's axis of articulation and at varying distances from the main body of said pawl.

Consequently, according to wire thickness and therefore according to how far the pawl is inclined, one or more of said holes will lie outside the fork allowing the free end of the wire to be passed through the hole nearest the fork, said wire being prevented from slipping out, even if the weight hung from it is temporarily raised thereby lessening strain on the pawl, because of the bends it makes when passing through the holes, and also by a knot which can, if desired, be tied at the end of the wire after it emerges from one of said holes.

A hook, useful for easy application to connecting parts in the ceiling or wherever the clamp is hung, is articulated onto the same pin that provides articulation for the pawl.

Characteristics and purposes of the invention will be made even clearer by the following example of preferred embodiments illustrated by diagrammatic drawings.

### Example of embodiment

Fig. 1: Perspective view of the clamp with its wire.

Fig. 2: The same clamp as in Fig. 1 with a thicker wire.

Fig. 3: Orthogonal section of the clamp in Fig. 2.

The clamp 10 is formed of a U-shaped fork 11 with base 12 in which base there is a longitudinal hole 13 through which the weight-carrying wire 14 passes.

Aligned transversal holes 22, 23 supporting the pin 25 are cut through the sides 20, 21 of the fork.

The same pin also carries the rotatable pawl 30 passing through said pawl's transversal holes 31.

Distance B between the pawl's axis of rotation and the base 15 of the fork 11 is shorter than length A of the pawl 30, and in any case shorter than said length A increased by the minimum thickness of the wires intended for use with the invented clamp.

Through the projection 35, on that part of the pawl farthest from the pull made by the wire, two holes 33, 34 are cut at different distances from the main body of the pawl.

The hook 17, for holding the clamp to its supporting structure, is mounted on pin 25.

Weights of any kind can be hung from the end of the wire though these must obviously be proportionate to the strength of the wire and of the clamp particularly suitable for lamps, chandeliers and similar lighting means.

It is equally obvious that the size of the clamp and diameter of the wire can vary, and therefore the loads the device and its wire can carry.

To fit the wire through the clamp, its upper end 37 is first passed inside the hole 13 in the base 12 of the U-fork 11, then under the free end of the pawl 30 and from there into one of the transversal holes 33, 34, whichever is most suitable to the size of the wire.

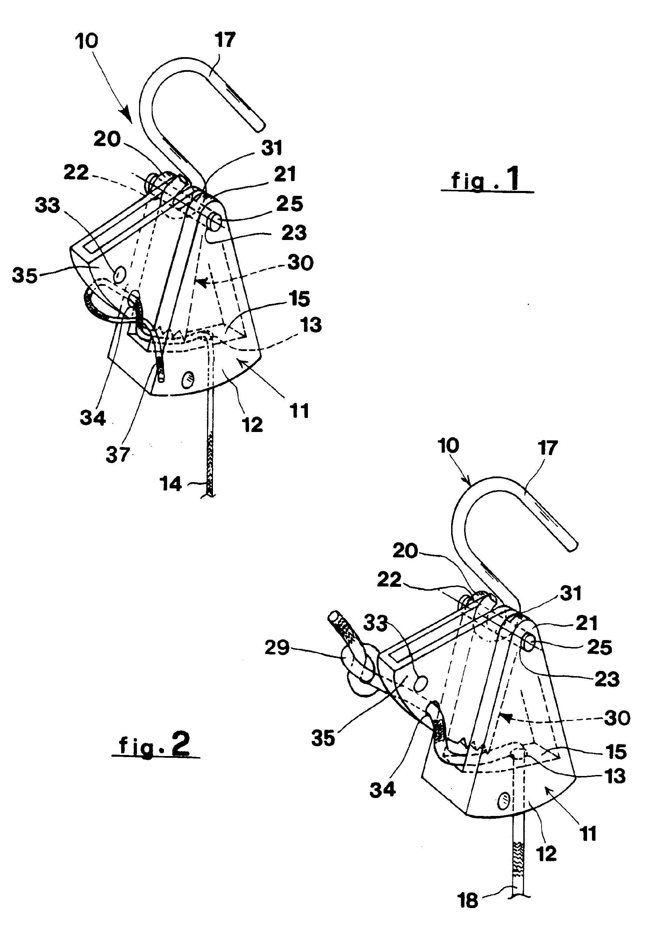

Because of its length the pawl can only assume an inclined position as shown in Figure 1. Opposed by the pawl, the wire is firmly held to the clamp without needing any other locking device since the force exerted by the pawl on the wire is a direct function of the load.

Should the suspended weight be raised for any reason,thus relieving strain on pawl, introduction of the free end 37 of the wire in either hole 33 or 34 ensures that the wire remains firmly held by the clamp, adding if desired,a knot 19 at the end of the wire.

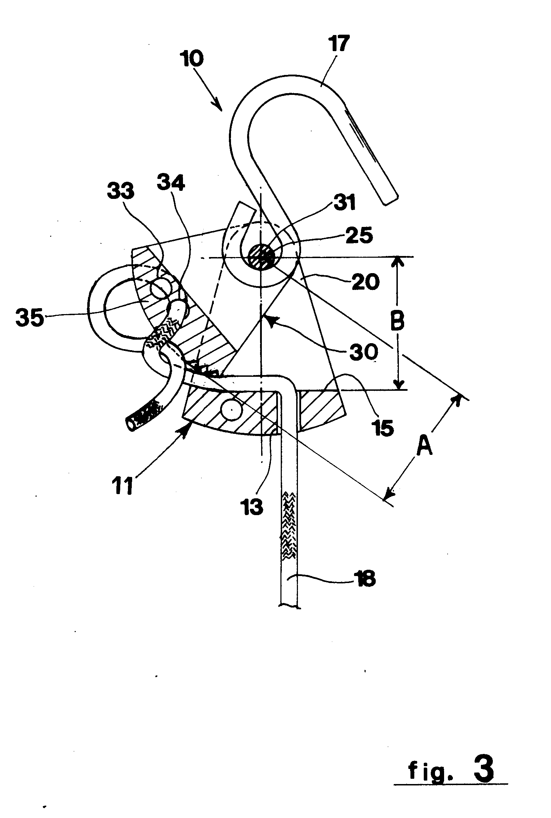

In Figs. 2 and 3 the hole nearest the fork is hole 34 because of the greater thickness of the wire 18. After passing through the hole 34 a knot 29 has been made at the free end of the wire.

## Claims

1. Clamp (10) for suspension cables (14 , 18) used especially for lamps and chandeliers, with a hook (17) for attaching said clamp to a ceiling or the like, composed of a body portion (11) with base (12) and two parallel sides (20, 21) in whose free ends are aligned holes (22, 23) traversed by a pin (25) on which a clamping pawl (30) can freely rotate, the length of said pawl, increased by the thickness of the cable (14 , 18), being greater than the distance between the geometrical axis of said pin (25) and the bottom (15) of the base (12) of said body portion (11), said base (12) having in it a longitudinal hole (13) for passage of the cable (14, 18) so that it can lodge between said base (15) and said pawl (30) characterized in that the hook (17) is held to said pin (25) on which the pawl (30) rotates, that said pawl (30), on the side opposite the pull made by the cable (14, 18), has a projection (35) in which there is at least one transverse hole (33, 34) extending through said projection from one front surface to the other of said projection (35) in the direction transverse to the direction of movement of the pawl (30), and that the longitudinal hole (13) joins the base (12) of the slot provided in the body portion (11) at a place opposite the projection (35) so that a force exerted on the cable (14, 18) which is passed through the longitudinal hole (13) through the gap between pawl (30) and the bottom (15) of the base (12) and through the transverse hole (33, 34), where the cable end (37) is secured, in a direction out of the longitudinal hole (13), will draw the pawl (30) tighter into engagement with the cable so that tightening force progressively increases as a direct result of a greater load, detachment of said cable being prevented, even if the suspended load is temporarily raised, both on account of the obstacle created by the bends that form in the cable (14, 18) as a consequence of the base (12) passing in the longitudinal hole (13) and the projection (35) on the pawl (30) passing in holes (33, 34), and on account of a possible knot (19, 29) being tied at the free end of said cable (14, 18).

## Patentansprüche

1. Klemme (10) für Hängekabel (14/18), speziell für Leuchten und Deckenleuchten mit einem Haken (17) zur Anbringung am Deckenbefestigungselementen und ähnlichem, bestehend aus einer Gabel (11) mit Basis (12) und zwei parallelen Seitenteilen (20/21), die am freien Ende der Duchgamgsbohrungen (22/23) angebracht und ausgefluchtet sind und die von einem Stift (25) durchlaufen werden, um welchen ein Sperrzahn (30) frei rotieren kann, dessen um die Dicke des Kabels (14/18) vergrößerte Länge größer ist als der Abstand zwischen der geometrischen Achse desselben Stifts (25) und dem Boden (15) der Basis (12) der besagten Gabel, wobei die besagte Basis mit einer Längsbohrung (13) versehen ist, die zur Hindurchführung des Kabels dient und zu dessen Anordnung zwischen dem besagten Boden (15) und dem besagten Sperrzahn (30), gekennzeichnet durch den Umstand, daß der Haken (17) am Stift (25) befestigt ist, um welchen der Sperrzahn (30) rotiert, daß der besagte Sperrzahn (30) auf der Seite, die der Zugwirkung des Kabels (14/18) gegenüberliegt, eine Verlängerung (35) aufweist, in welcher mindestens eine Querbohrung (33/34) vorgesehen ist, die sich über die besagte Verlängerung von der einen Frontseite zur anderen Frontseite der besagten Verlängerung (35) in Querrichtung zur Bewegungsrichtung des Sperrzahns erstreckt, sowie daß die Längsbohrung (13) auf die Basis (12) des Spalts trifft, der auf der Seite des Körpers (11) vorgesehen ist, die der Verlängerung (35) gegenüberliegt, sodaß eine Kraft, die auf das durch die Längsbohrung (13), durch den Bereich zwischen dem Sperrzahn (30) und dem Boden (5) der Basis (12) sowie durch das Querloch (33, 34), bei dem das Kabelende (37) gesichert wird, geführte Kabel (14/18) in einer solchen Richtung einwirkt, daß das Kabel aus der Längsbohrung (13) heraustritt, bewirkt, daß der Sperrzahn (30) in engen Kontakt mit dem Kabel gezogen wird mit einer in direktem Bezug zur Belastung fortlaufend zunehmenden Festziehkraft und daß die Loslösung des besagten Kabels auch in dem Fall, daß die Hängelast zeitweilig angehoben wird, verhindert wird aufgrund des durch die Knicke geschaffenen Hindernisses, welche im Kabel (14/18) entstehen aufgrund seiner Hindurchführung durch die Bohrung (13) der Basis (12) und durch die Bohrungen (33, 34) der Verlängerung (35) des Sperrzahns (30) und auch aufgrund eines eventuellen Knotens (19/29), der am freien Ende des besagten Kabels angefertigt wird.

## Revendications

1. Etrier (10) pour câbles (14 - 18) de suspension, servant principalement pour des lampes et des lustres, avec un crochet (17) pour l'application aux ancrages du plafond ou autres, se composant d'une fourche (11) avec une base (12) et deux côtés (20 - 21) parallèles présentant à leur extrémité libre des orifices (22 - 23) passants et alignés, traversés par un pivot (25) sur lequel peut tourner librement une dent d'arrêt (30) dont la longueur, augmentée de l'épaisseur du câble (14 - 18) est plus grande que la distance entre l'axe géométrique du pivot (25) et le fond (15) de la base (12) de la fourche, la base comportant un orifice (13) longitudinal pour le passage du câble et pour permettre son logement entre le fond (15) et la dent d'arrêt (30), caractérisé par le fait que le crochet (17) est assuré au pivot (25) sur lequel tourne la dent d'arrêt (30), que la dent d'arrêt (30) présente sur la partie opposée au tirage du câble (14 - 18) une projection (35) dans laquelle est prévu au moins un orifice transversal (33 - 34) qui s'étend à travers cette projection d'une surface frontale à l'autre surface frontale de cette dernière (35) dans une direction transversale par rapport à la direction du mouvement de la dent d'arrêt, et que l'orifice longitudinal (13) rencontre la base (12) de la fissure prévue dans la partie du corps (11) dans une position opposée à la projection (35) de telle sorte qu'une force exercée sur le câble (14, 18) qui est passé à travers l'orifice longitudinal (13), à travers l'espace entre la dent d'arrêt (30) et le fond (5) de la base (12), et à travers l'orifice transversal (33, 34) où l'extrémité du câble (37) est assurée, de manière à sortir de l'orifice longitudinal (13), agira de telle sorte que la dent d'arrêt (30) sera tirée en étroit contact avec le câble, avec une augmentation progressive de la force de serrage en direct avec la charge, et que le câble en question ne pourra pas se décrocher même dans le cas où la charge suspendue serait momentanément soulevée à cause de l'obstacle créé par les plis qui se forment dans le câble (14 - 18) par suite du passage dans l'orifice (13) de la base (12) et dans les orifices (33, 34) de la projection (35) de la dent d'arrê(30), et également à cause d'un noeud éventuel(19, 29) effectué à l'extrémité libre du câble en question.

fig.1

fig.2

fig. 3